# EUROPEAN PATENT APPLICATION

(11) **EP 0 676 253 A1**
(43) Date of publication of application: **11.10.1995**
(21) Application number: 95104915.4
(22) Date of filing: 03.04.1995
(51) Int. Cl.: B23D 61/10, B28D 5/02

(54) **A chamfered hub blade**

(30) Priority: 06.04.1994 MY 9400828
(71) Applicant: MOTOROLA, INC., Schaumburg, IL 60196 (US)
(72) Inventor: Letchumanan, Kumaravelu, Senawang, Seremban 70450 (MY)
(74) Representative: Hudson, Peter David

(57) **Abstract**

The outer surface (108) of a saw blade hub (110) is continuously sloped to form an oblique blade hub chamfering angle (114) with a saw blade (106).

## Description

### Technical Field

This invention relates in general to blades and in particular to saw blades for cutting semiconductor wafers.

### Background

The standard method for scribing, slicing or otherwise cutting large-scale integrated circuits makes use of a diamond impregnated saw blade to cut the scribe lines of a wafer.

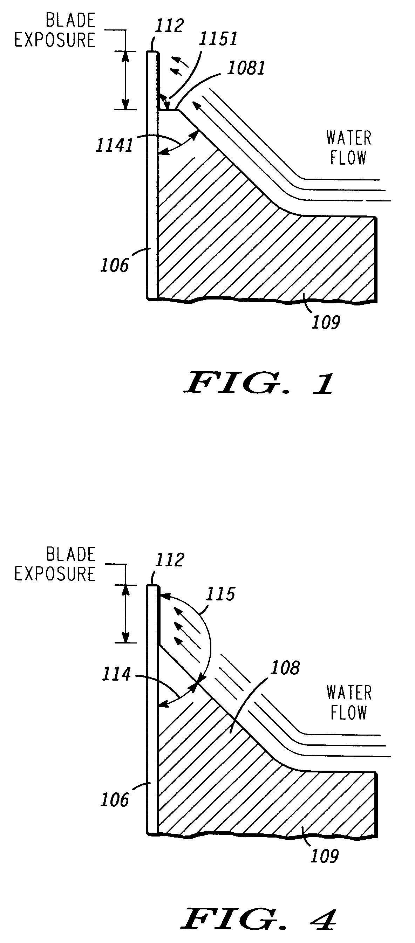

In current saw technology, a hub assembly includes a flange 1081 for connecting a circular saw blade 106 to a spinning hub 109, similar to the slicing action of a pizza cutter. The saw blade 106 has a non-exposed surface portion which is connected underneath to the hub. The sides of the hub form a flange for electrolytically plating the saw blade to the hub. In the prior art, this flange has a straight or vertical side for forming a ninety degree blade hub chamfering angle 1141 with the non-exposed surface portion of the saw blade, as seen in FIG. 1. Since the flange is straight, a complementary blade exposed angle 1151 formed by the flange with the exposed surface portion of the saw blade is also ninety degrees for the blade hub chamfering angle and the blade exposed angle to form a combined one hundred eighty degree angle.

With the blade hub chamfering angle or the blade exposed angle set at ninety degrees, the blade life has a 30,000 cut life span. Thus, after the completion of the 30,000th cut, the saw blade will be historically replaced with a new blade. Hence, the costs of the blades and of the subsequent assembly labor, increase with each blade replacement.

One factor that increases the blade life is a higher cooling rate. Conventionally, cooling is achieved by spraying water on the saw blade to cool down the blade temperature. However, since the flange 1081 of the hub assembly is flat and perpendicular to the blade 106 as shown in FIG. 1, the water flow is tangential to the edge of the exposing blade or the cutting zone 112 and does not hit the blade surface initially. With the backlash of the water hitting the flange 1081, some of the water, along with some wafer debris, may get trapped at the blade exposed angle 1151 or on top of the exposed blade to heat up the blade temperature. The wafer debris is caused by the attachment of sawing residue such as aluminum dust, gold dust, or silicon dust from the wafer which adds to the slicing loss (kerf). Accordingly, there is a need for increasing the blade life span by increasing the cooling rate by improving water circulation. And by removing the wafer debris from the blade.

### Summary of the Invention

Briefly, according to the invention, there is provided a saw blade hub for cutting semiconductor devices. The outer surface of the hub is sloped to form an oblique blade hub chamfering angle with a saw blade.

### Brief Description of the Drawings

FIG. 1 is a side view of a conventional hub blade.

FIG. 2 is a break-down diagram of a saw blade hub assembly, in accordance with the present invention.

FIG. 3 is an assembled representation of the saw blade hub assembly of FIG. 2.

FIG. 4 is a side view of the hub blade of FIG. 2.

### Detailed Description of the Preferred Embodiment

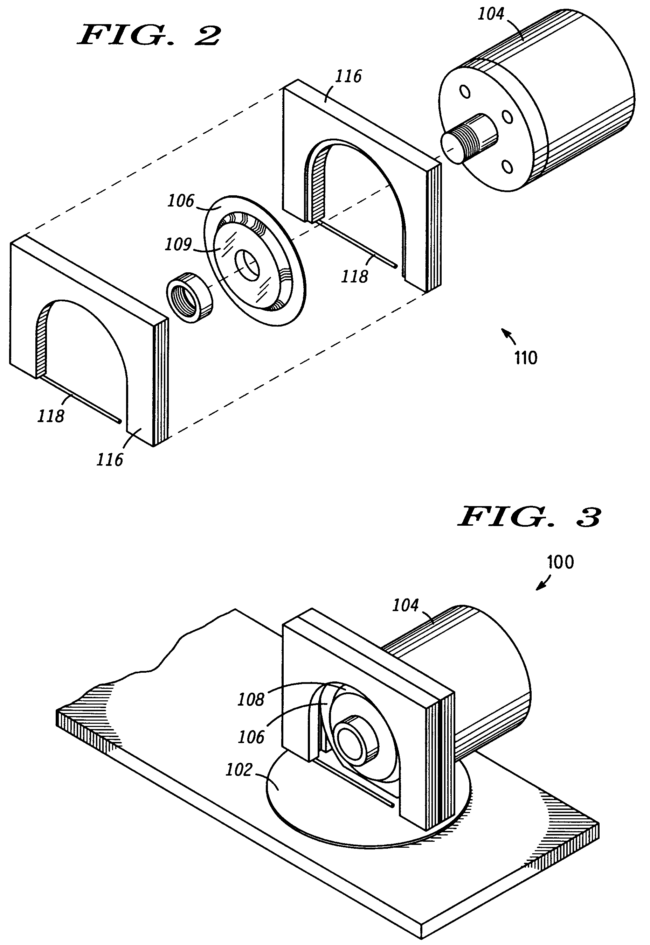

Referring to FIGs. 2 and 3, a wafer slicer 100 is shown for cutting semiconductor devices such as a wafer 102 into chips containing individual electronic circuits. A spindle 104 revolves and serves as an axis for turning a removable saw blade hub assembly 110 having a hub supported circular saw blade 106.

To cool the saw blade hub assembly 100, while cutting, a cleaning agent, such as a pair of cooling water housings 116 each attached to the spindle 104 with corresponding water nozzles 118 on each side of the blade 106, sprays water on the outer surface of the hub assembly 110.

The saw blade 106 cuts or slices at the perimeter defined by the longest or outside diameter of the hub assembly 110. Preferably, the hub assembly 110 consists of an aluminum core or hub with the blade 106 formed from a diamond/nickel matrix electrolytically plated to the inside diameter of the saw blade 106. A projecting rim or flange 108 on the outside surfaces of the hub assembly 110 holds the blade 106 in place and gives it strength.

In accordance with the invention, the flat flange of the hub assembly has been redesigned to be chamfered as shown in FIG. 4 to have a continuous sloping flange 108 by increasing the slant of the hub to form an oblique angle 114 instead of the ninety degree angle 1141 of FIG. 1. Preferably, the angle formed by the outer surface, edge, or side of the sloping flange 108 and the non-exposed surface of the blade 106 is forty-five degrees.

With the new design, the chamfered hub or sloping flange 108 allows the water to hit the entire surface of the upper or front exposed blade surface, without being trapped, to wash away debris and maximize the cooling rate. By giving more of an exposed blade surface to create more water flow or better water circulation to establish a higher cooling rate and a lower residue retention, the forty-five degree blade hub chamfering angle has been found to increase the blade life fourfold.

This enhanced water circulation prevents the premature loading of the diamond particles of the blade by the attachment of wafer or sawing residue to the blade. In this manner, the blade wear rate is also minimized by the non-attachment of foreign particles to the blade due to the enhanced water circulation. Because less residue is trapped, the heat generated by the trapped residue is also reduced to increase the overall blade cooling rate. Furthermore, the enhanced cooling of the blade surface due to better water circulation along more of the blade surface, allowed by the chamfered hub 108, maintains the blade temperature of the cutting zone 112 at a lower temperature level, thus also reducing the blade wear rate.

In summary, the present invention provides a saw blade with a forty-five degree blade hub chamfering angle formed with the sloping flange of a saw hub assembly. This flange has a sloping edge for forming a forty-five degree blade hub chamfering angle 114 with the non-exposed surface portion of the saw blade, as seen in FIG. 4. Since the flange is sloping at forty-five degrees, a complementary blade exposed angle 115 formed by the flange with the exposed surface portion of the saw blade is one hundred and thirty-five degrees for the blade hub chamfering angle and the blade exposed angle to form a combined one hundred eighty degree angle. This forty-five degree blade hub chamfering angle increases the blade life fourfold by giving more of an exposed blade surface to create more water flow or better water circulation to establish a higher cooling rate and a lower residue retention.

## Claims

1. A saw blade hub assembly comprising:
a saw blade having a non-exposed surface portion; and
a flange connected to the saw blade, the flange having a sloped side for forming an oblique blade hub chamfering angle with the non-exposed surface portion of the saw blade, wherein the chamfering angle is less than ninety degrees.

2. The assembly of claim 1, wherein the chamfering angle is forty-five degrees.

3. A saw blade hub assembly comprising:
a saw blade having an exposed surface portion; and
a flange connected to the saw blade, the flange having a sloped side for forming a blade exposed angle with the exposed surface portion of the saw blade, wherein the blade exposed angle is greater than ninety degrees.

4. The assembly of claim 3, wherein the blade exposed angle is one hundred and thirty-five degrees.

5. A saw blade hub assembly for cutting semiconductor devices, the assembly comprising:
a saw blade having a non-exposed surface portion; and
a flange connected to the saw blade, the flange having a sloped side for forming an oblique blade hub chamfering angle with the non-exposed surface portion of the saw blade, wherein the chamfering angle is less than ninety degrees.

6. The assembly of claim 5, wherein the oblique blade hub chamfering angle is forty-five degrees.

7. The assembly of claim 5, wherein the oblique blade hub chamfering angle is approximately forty-five degrees.

8. The assembly of claim 5 further comprising a cooling agent for washing debris away from the oblique blade hub chamfering angle.

9. The assembly of claim 8, wherein the cooling agent comprises water applied in a flow within a water circulation means.

10. A method for cutting semiconductor devices, the method comprising the steps of:
locating a saw blade hub assembly to cut a semiconductor wafer, the saw blade hub assembly having:
a saw blade having a non-exposed surface portion; and
a flange connected to the saw blade, the flange having a
sloped side for forming an oblique blade hub chamfering angle
with the non-exposed surface portion of the saw blade, wherein
the chamfering angle is less than ninety degrees;
flowing water to the saw blade hub assembly; and
washing debris away from the oblique blade hub chamfering angle.
